# EUROPEAN PATENT APPLICATION

(11) **EP 4 449 872 A1**
(43) Date of publication of application: **23.10.2024**
(21) Application number: 22907465.3
(22) Date of filing: 14.12.2022
(51) Int. Cl.: A23C 9/12

(54) **FERMENTED COMPOSITION AND METHOD FOR PRODUCING SAME**

(30) Priority: 15.12.2021 JP 2021203339
(71) Applicant: KIRIN HOLDINGS KABUSHIKI KAISHA, Nakano-ku, Tokyo 164-0001 (JP)
(72) Inventor: NAKANO, Akiko, Tokyo 164-0001 (JP); KUBO, Haruna, Tokyo 164-0001 (JP); KUWAHIRA, Hideo, Tokyo 164-0001 (JP)
(74) Representative: Hoffmann Eitle
(86) International application number: PCT/JP2022/045960
(87) International publication number: WO 2023/112941

(57) **Abstract**

It is to provide a fermentation composition comprising live bacteria of lactic acid bacteria, etc. at a certain concentration (cfu/mL) or more and having a pH in a neutral range, in which fermentation composition "an increase in sour taste and odor", "a decrease in pH", and/or "a decrease in the live bacteria concentration (cfu/mL) of lactic acid bacteria, etc." during refrigerated storage after the production are suppressed, and a method of producing the fermentation composition, and so on. It is related to a fermentation composition having a pH of 6.0 to 7.4, the composition comprising: (a) 1 × 10⁶ cfu/mL or more of live bacteria of one or more types of bacteria selected from the group consisting of lactic acid bacteria and bacteria of the genus *Bifidobacterium;* (b) a milk raw material and/or a fermented product using a milk raw material; and (c) dead bacterial cells of bacteria of the genus *Lactococcus,* and a method of producing the fermentation composition, and so on.

## Description

### Technical Field

The present invention relates to a fermentation composition comprising live bacteria of lactic acid bacteria and bacteria of the genus *Bifidobacterium* (hereinafter, also referred to as "bifidobacteria". Hereinafter, the lactic acid bacteria and the bifidobacteria are also collectively referred to as lactic acid bacteria, etc.) at a certain concentration (cfu/mL) or more and having a pH in a neutral range, in which fermentation composition "an increase in sour taste and odor", "a decrease in pH", and/or "a decrease in the live bacteria concentration (cfu/mL) of lactic acid bacteria, etc." during refrigerated storage after the production are suppressed, and relates to a method for producing the composition, and so on.

### Background Art

A fermentation composition, such as fermented milk, obtained by fermenting a milk raw material with lactic acid bacteria, etc. is not only a nutritional food rich in protein and calcium, but is also expected to have various physiological effects because it contains lactic acid bacteria, etc. and metabolites thereof, and has received increasing attention in recent years. As such physiological effects, effects such as improving immunity, improving allergic diseases, improving autonomic nervous function, and preventing and improving lifestyle-related diseases are known. In addition, lactic acid bacteria, etc. excellent in a specific functional effect have been also broadly studied, and consumer's desire to actively ingest such excellent lactic acid bacteria, etc. in food and beverages such as fermented milk and lactic acid bacteria beverages has been increasing in recent years.

All fermentation compositions, such as fermented milk and a lactic acid bacteria beverage, are produced by fermenting milk or the like with live bacteria of lactic acid bacteria, etc. However, in such fermentation compositions, although the sour taste is not very strong immediately after the production of a product (for example, immediately after cooling after fermentation of a milk raw material), live lactic acid bacteria further generate lactic acid and acetic acid during refrigerated storage (for example, refrigerated storage during the distribution process) after the product production to reduce the pH and also increase the sour taste and odor, and there is a problem that the sour taste and odor become excessive at the end of storage and the flavor deteriorates (the so-called "problem of post-acid generation or post-acidification during refrigerated storage") (see Patent Literatures 1 and 2).

As a method for improving such post-acid generation, for example, Patent Literature 1 discloses a method for suppressing or reducing post-acid generation that occurs after fermentation by performing maturing in an ice temperature zone in the production process of yogurt, and Patent Literature 2 discloses a method for suppressing post-acidification of fermented dairy products by using, for example, milk with reduced lactose as a raw material. However, these methods also have problems in simpleness and so on.

In addition, as technology using dead bacterial cells of lactic acid bacteria, etc., Patent Literature 3 discloses a method for improving richness of coffee (quality of a drink) by blending dead bacterial cells of lactic acid bacteria, etc. with a coffee beverage packed in a container.

However, it has not been known that "an increase in sour taste and odor", "a decrease in pH", and/or "a decrease in the live bacteria concentration (cfu/mL) of lactic acid bacteria, etc." in a fermentation composition product during refrigerated storage after the production are suppressed by adjusting the pH of the fermentation composition to a neutral range and adding dead bacterial cells of bacteria of the genus *Lactococcus* to the product.

### Prior Art Documents

### Patent Documents

Patent Literature 1: Japanese unexamined Patent Application Publication No. 2003-259802
Patent Literature 2: Japanese unexamined Patent Application Publication (Translation of PCT Application) No. 2017-522012
Patent Literature 3: Japanese unexamined Patent Application Publication No. 2019-122316

### Summary of the Invention

### Object to be Solved by the Invention

An object of the present invention is to provide a fermentation composition comprising live bacteria of lactic acid bacteria, etc. at a certain concentration (cfu/mL) or more and having a pH in a neutral range, in which fermentation composition "an increasing in sour taste and odor", "a decrease in pH", and/or "a decrease in the live bacteria concentration (cfu/mL) of lactic acid bacteria, etc." during refrigerated storage after the production are suppressed, and a method for producing the composition, and so on.

### Means to Solve the Object

The present inventors have conducted extensive studies to solve the problems to be solved by the present invention, and as a result, found that the problems can be solved by producing a fermentation composition with a pH of 6.0 to 7.4 (preferably, by further adjusting the pH of a milk raw material for fermentation composition production using a pH adjuster) by a production method comprising step (A) or (B), and step (C):
(A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
(B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
(C) step C of adding dead bacterial cells of bacteria of the genus *Lactococcus.* The present invention has been thus completed.

That is, the present invention relates to:
(1) a fermentation composition having a pH of 6.0 to 7.4, the composition comprising: (a) 1 × 10⁶ cfu/mL or more of live bacteria of one or more types of bacteria selected from the group consisting of lactic acid bacteria and bacteria of the genus *Bifidobacterium*; (b) a milk raw material and/or a fermented product using a milk raw material; and (c) dead bacterial cells of bacteria of the genus *Lactococcus;*
(2) a fermentation composition having a pH of 6.0 to 7.4 produced by a production method comprising step (A) or (B), and step (C):
   (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
   (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
   (C) step C of adding dead bacterial cells of bacteria of the genus *Lactococcus;*
(3) the fermentation composition according to the above (1) or (2), wherein the content concentration of the dead bacterial cells of bacteria of the genus *Lactococcus* is 1 × 10⁸ to 1 × 10¹⁰ cells/g;
(4) the fermentation composition according to any one of the above (1) to (3), wherein the fermentation composition further comprises a pH adjuster, or the milk raw material for fermentation composition production is a milk raw material comprising a pH adjuster;
(5) the fermentation composition according to any one of the above (1) to (4), wherein the live bacteria of one or more types of bacteria selected from the group consisting of lactic acid bacteria and bacteria of the genus *Bifidobacterium* are one or more types of live bacteria selected from the group consisting of bacteria of the genus *Lactococcus,* bacteria of the genus *Streptococcus,* bacteria of the genus *Lactobacillus,* and bacteria of the genus *Bifidobacterium;*
(6) the fermentation composition according to any one of the above (1) to (5), wherein the difference between the pH of the fermentation composition before refrigerated storage and the pH of the fermentation composition after refrigerated storage for 14 days is less than 1;
(7) a method of producing a fermentation composition having a pH of 6.0 to 7.4, in which an increase in sour taste and odor, a decrease in pH, and/or a decrease in the content concentration (cfu/mL) of the live bacteria during refrigerated storage after the production of the fermentation composition are suppressed, the method comprising step (A) or (B), and step (C):
   (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
   (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
   (C) step C of adding dead bacterial cells of bacteria of the genus *Lactococcus;* and
(8) a method for suppressing an increase in sour taste and odor, a decrease in pH, and/or a decrease in the content concentration (cfu/mL) of the live bacteria during refrigerated storage after the production of a fermentation composition, wherein the fermentation composition has a pH of 6.0 to 7.4, and wherein the fermentation composition is produced by a production method comprising step (A) or (B), and step (C):
   (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
   (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
   (C) step C of adding dead bacterial cells of bacteria of the genus *Lactococcus.*

### Effect of the Invention

According to the present invention, it is possible to provide a fermentation composition comprising live bacteria of lactic acid bacteria, etc. at a certain concentration (cfu/mL) or more and having a pH in a neutral range, in which fermentation composition "an increasing in sour taste and odor", "a decrease in pH", and/or "a decrease in the live bacteria concentration (cfu/mL) of lactic acid bacteria, etc." during refrigerated storage after the production are suppressed, and a method for producing the composition, and so on.

According to the present invention, it is possible to provide a new fermentation composition that appeals to customers who wish to ingest a large amount of live bacteria of lactic acid bacteria for health reasons but do not like sour taste and odor.

### Brief Description of Drawing

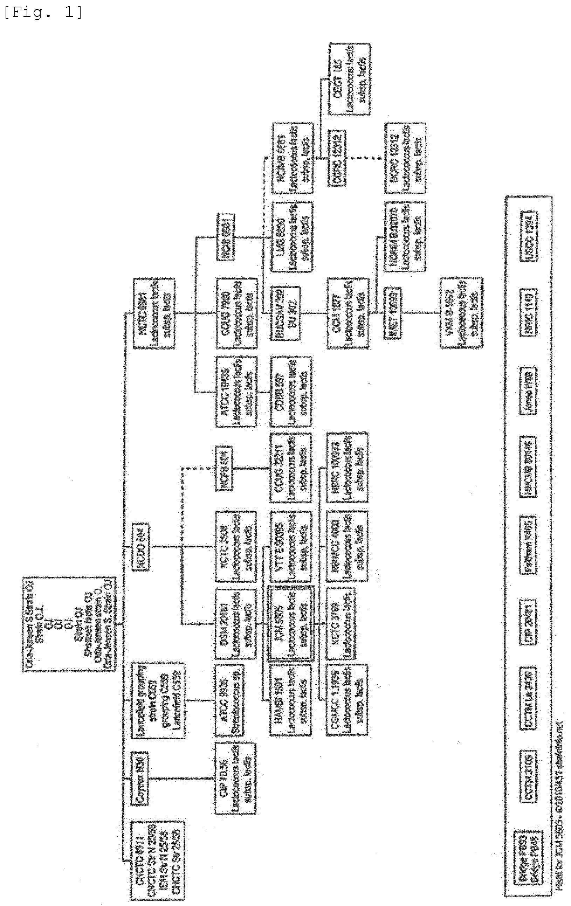

[Figure 1] Figure 1 is a diagram showing a relationship between a *Lactococcus lactis* subsp. *lactis* JCM5805 strain and a strain equivalent to the strain (a strain derived from the strain and a strain from which the strain is derived).

### Mode of Carrying Out the Invention

The present invention includes embodiments as follows:
[1] a fermentation composition having a pH of 6.0 to 7.4, the composition comprising (a) 1 × 10⁶ cfu/mL or more of live bacteria of one or more types of bacteria selected from the group consisting of lactic acid bacteria and bacteria of the genus *Bifidobacterium,* (b) a milk raw material and/or a fermented product using a milk raw material, and (c) dead bacterial cells of bacteria of the genus *Lactococcus;*
[2] a fermentation composition having a pH of 6.0 to 7.4 produced by a production method comprising step (A) or (B), and step (C):
   (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
   (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
   (C) step C of adding dead bacterial cells of bacteria of the genus *Lactococcus;*
      (hereinafter, the fermentation composition of the above [1] and the fermentation composition of the above [2] are also collectively referred to as "fermentation composition of the present invention");
[3] a method of producing a fermentation composition having a pH of 6.0 to 7.4, in which an increase in sour taste and odor, a decrease in pH, and/or a decrease in content concentration (cfu/mL) of live bacteria during refrigerated storage after the production of the fermentation composition are suppressed, the method comprising step (A) or (B), and step (C):
   (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
   (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
   (C) step C of adding dead bacterial cells of bacteria of the genus *Lactococcus;*
      (hereinafter, also referred to as "production method of the present invention") and
[4] a method for suppressing an increase in sour taste and odor, a decrease in pH, and/or a decrease in the content concentration (cfu/mL) of live bacteria during refrigerated storage after the production of a fermentation composition wherein the fermentation composition has a pH of 6.0 to 7.4, wherein the fermentation composition is produced by a production method comprising step (A) or (B), and step (C):
   (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
   (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
   (C) step C of adding dead bacterial cells of bacteria of the genus *Lactococcus.*
      (hereinafter, also referred to as "suppression method of the present invention")

### (Milk raw material)

The "milk raw material" as used herein is a concept encompassing the "milk raw material", "milk raw material for fermented product preparation", and "milk raw material for fermentation composition production" as used herein unless otherwise specified. The "milk raw material for fermented product preparation" as used herein means a "milk raw material" that is used for preparing a "fermented product" as used herein, and the "milk raw material for fermentation composition production" as used herein means a "milk raw material" that is used for preparing a "fermentation composition" as used herein.

Examples of the "milk raw material" as used herein include typically "milk" defined in the Ministerial Ordinance on Milk, etc., that is, milk such as raw milk, cow's milk, special milk, raw goat's milk, pasteurized goat's milk, raw sheep's milk, composition modified milk, low-fat milk, skimmed milk, and processed milk, and products containing milk solids-not-fat equivalent to or higher than the milk (i.e., 8% or more), but are not particularly limited as long as it is a composition containing a milk ingredient. Examples of the "milk ingredient" as used herein include one or more selected from the group consisting of milk fat derived from "milk" defined in the Ministerial Ordinance on Milk, etc. and milk solids-not-fat content derived from the "milk" (e.g., protein derived from the "milk" and/or sugar derived from the "milk").

The "milk raw material" as used herein can be prepared using milk, a dairy product, or the like. When milk and/or a dairy product is used, more specifically, the "milk raw material" can be prepared using one or more selected from the group consisting of cow's milk, buffalo's milk, sheep's milk, goat's milk, horse's milk, concentrated milk, skimmed milk, concentrated skimmed milk, skimmed milk powder, whole milk powder, cream, butter, buttermilk, condensed milk, lactose, milk protein concentrate, whey protein concentrate, and water.

In the "milk raw material" as used herein, the concentration of the solid content of the milk ingredient is, for example, 1 to 18 wt%, preferably 2 to 16 wt%, and more preferably 4 to 12 wt%, and/or, the concentration of the milk solids-not-fat content is, for example, 1 to 18 wt%, preferably 2 to 16 wt%, more preferably 2 to 14 wt%, further preferably 4 to 12 wt%, 6 to 10 wt%, or 7 to 9 wt%, and/or, the concentration of the milk fat content is, for example, 0 to 8 wt%, preferably 0.1 to 7 wt% and more preferably 0.5 to 4 wt% or 1 to 3 wt%.

### (Fermented product using milk raw material)

The "fermented product using a milk raw material" as used herein means a product obtained by fermenting a milk raw material for fermented product preparation with lactic acid bacteria, etc. Suitable examples of the "fermented product using a milk raw material" include a fermented product using a milk raw material in which the concentration of live bacteria of lactic acid bacteria, etc. is 1 × 10⁷ cfu/mL or more and preferably 1 × 10⁷ to 1 × 10¹⁰ cfu/mL.

Such a "fermented product using a milk raw material" can be produced by fermenting a milk raw material for fermented product preparation with live bacteria of lactic acid bacteria, etc. until the concentration of live bacteria of the lactic acid bacteria, etc. becomes 1 × 10⁷ cfu/mL or more and preferably 1 × 10⁷ to 1 × 10¹⁰ cfu/mL.

The "fermented product using a milk raw material" as used herein conveniently includes isolates of lactic acid bacteria, etc. obtained from the fermented product using a milk raw material by centrifugation or the like.

### (Dead bacterial cells of bacteria of the genus Lactococcus)

In the present invention, dead bacterial cells of bacteria of the genus *Lactococcus* are used. The bacteria of the genus *Lactococcus* are bacteria classified as lactic acid bacteria. Examples of the dead bacterial cells of bacteria of the genus *Lactococcus* include dead bacterial cells of one or more types of bacteria selected from the group consisting of bacteria of the genus *Lactococcus,* preferably dead bacterial cells of one or more types of bacteria selected from the group consisting of *Lactococcus lactis,* and more preferably dead bacterial cells of one or more types of bacteria selected from the group consisting of *Lactococcus lactis* subsp. *lactis* (hereinafter, also simply referred to as *"Lactococcus lactis*"), Lactococcus lactis subsp. *lactis* biovar *diacetylactis, Lactococcus lactis* subsp. *cremoris, Lactococcus raffinolactis, Lactococcu spiscium, Lactococcus plantarum, Lactococcus garvieae,* and *Lactococcus lactis* subsp. *hordniae,* further preferably dead bacterial cells of *Lactococcus lactis,* more preferably dead bacterial cells of one or more types of bacteria selected from the group consisting of *Lactococcus lactis* JCM5805, *Lactococcus lactis* JCM20101, *Lactococcus lactis* NBRC12007, and *Lactococcus lactis* NRIC1150, and particularly preferably dead bacterial cells of *Lactococcus lactis* JCM5805.

Regarding the bacterial strains of the dead bacterial cells mentioned herein, a bacterial strains equivalent to the bacterial strains are also included in the bacterial strains as long as they have an effect of the present invention. Here, an equivalent bacterial strain refers to a bacterial strain derived from the above-mentioned bacterial strain or the bacterial strain from which the above-mentioned bacterial strain is derived or a descendant bacterial strain thereof. Equivalent bacterial strains may also be stored at strain depositories. Figure 1 shows a bacterial strain derived from *Lactococcus lactis* subsp. *lactis* JCM5805 and the bacterial strain from which *Lactococcus lactis* subsp. *lactis* JCM5805 is derived. The bacterial strains equivalent to *Lactococcus lactis* subsp. *lactis* JCM5805 shown in Figure 1 can be used as the dead bacterial cells of the present invention as long as they have an effect of the present invention. As used herein, the term *"Lactococcus lactis* subsp. *lactis* JCM5805 (*Lactococcus lactis* JCM5805)" includes these equivalent bacterial strains.

The "dead bacterial cells of bacteria of the genus *Lactococcus"* as used herein are not particularly limited as long as they are dead bacterial cells of bacteria of the genus *Lactococcus* and may be a dry matter or may be a nondry matter, but are preferably a dry matter from the viewpoint of storage stability of the dead bacterial cells, and preferable examples thereof include a dry powder.

The method for preparing the dead bacterial cells of bacteria of the genus *Lactococcus* is not particularly limited, and examples thereof include a method of sterilizing a culture medium for culturing bacteria of the genus *Lactococcus* and then collecting bacterial cells by filtration, centrifugation, or the like and a method of collecting bacterial cells from a culture medium for culturing bacteria of the genus *Lactococcus* by filtration, centrifugation, or the like and then performing sterilization, and drying treatment or pulverization treatment can be further performed as needed.

The means for sterilization is not particularly limited, and not only heating but also a common method to kill bacteria, such as irradiation with ultraviolet rays or γ rays, can be used.

In the present invention, dead bacterial cells of bacteria of the genus *Lactococcus* may be added at any process when a fermentation composition is produced. For example, when the fermentation composition of the present invention is produced by a production method including the step B, dead bacterial cells may be added to a milk raw material for fermented product preparation before the fermentation process of the milk raw material for fermented product preparation, dead bacterial cells may be added to a milk raw material for fermented product preparation during the fermentation process of the milk raw material for fermented product preparation, or dead bacterial cells may be added to a fermentation composition after completion of the fermentation process of a milk raw material for fermented product preparation, but preferably, dead bacterial cells may be added to a milk raw material for fermented product preparation before the fermentation process of the milk raw material for fermented product preparation, or dead bacterial cells of lactic acid bacteria may be added to a milk raw material for fermented product preparation during the fermentation process of the milk raw material for fermented product preparation. When the fermentation composition of the present invention is produced by a production method including the step A, dead bacterial cells of bacteria of the genus *Lactococcus* may be added to a milk raw material for fermented product preparation or to a milk raw material for fermentation composition production, and preferably added to a milk raw material for fermentation composition production.

The amount of the dead bacterial cells of bacteria of the genus *Lactococcus* used in the present invention is not particularly limited as long as the effect of the present invention is obtained, but the number (cells/g) of dead bacterial cells of lactic acid bacteria contained per unit fermentation composition may be, for example, 1 × 10⁸ to 1 × 10¹⁰ cells/g and preferably 5 × 10⁸ to 1 × 10¹⁰ cells/g.

The number of dead bacterial cells of bacteria of the genus *Lactococcus* in a fermentation composition can be measured by direct microscopic examination, a particle electrical detection band method, or a PCR method.

### (pH)

The pH of the fermentation composition of the present invention may be 6.0 to 7.4 and preferably 6.4 to 7.4. In the present specification, if there is no particular reference to the time of pH measurement of a fermentation composition, it means the pH of the fermentation composition immediately after the production. The pH of a fermentation composition can be measured according to a known method using, for example, a pH meter at 20°C.

### (pH Adjuster)

The "fermentation composition" in the present invention does not need to contain a pH adjuster, but preferably contains a pH adjuster from the viewpoint of obtaining more effects of the present invention. The pH adjuster is not particularly limited as long as it can be used under the Food Sanitation Act and can adjust pH, and examples thereof include sodium or potassium salts of organic acids, such as sodium citrate (trisodium citrate), potassium citrate, sodium hydrogen carbonate, sodium carbonate, potassium hydrogen carbonate, potassium carbonate, disodium hydrogen phosphate, sodium acetate, potassium acetate, and sodium L-ascorbate; bases such as sodium hydroxide and potassium hydroxide; and other pH adjusters that can be used under the Food Sanitation Act. In particular, trisodium citrate is preferable. The pH adjusters may be used alone or in a combination of two or more.

When a pH adjuster is contained, the content concentration of the pH adjuster is not particularly limited and can be appropriately adjusted according to the pH to be adjusted, and the concentration of the pH adjuster is, for example, 0.01 to 3 wt% or 0.1 to 2 wt% based on the total amount of the fermentation composition.

### (Live bacteria of lactic acid bacteria, etc.)

The "live bacteria of one or more types of bacteria selected from the group consisting of lactic acid bacteria and bacteria of the genus *Bifidobacterium"* as used herein are not particularly limited as long as they are live bacteria of one or more types of bacteria selected from the group consisting of lactic acid bacteria and bacteria of the genus *Bifidobacterium,* and examples thereof preferably include live bacteria of one or more types (preferably two or more types, more preferably three or more types) of bacteria selected from the group consisting of bacteria of the genus *Lactococcus,* bacteria of the genus *Streptococcus,* bacteria of the genus *Lactobacillus,* and bacteria of the genus *Bifidobacterium,* more preferably include live bacteria of one or more types (preferably one type or two types) of bacteria of the genus *Lactococcus* and one or more types (preferably one type or two types) of bacteria of the genus *Streptococcus;*
live bacteria of one or more types (preferably one type or two types) of bacteria of the genus *Lactococcus* and one or more types (preferably one type or two types) of bacteria of the genus *Lactobacillus;*
live bacteria of one or more types (preferably one type or two types) of bacteria of the genus *Streptococcus* and one or more types (preferably one type or two types) of bacteria of the genus *Lactobacillus;*
live bacteria of one or more types (preferably one type or two types) of bacteria of the genus *Lactococcus;*
live bacteria of one or more types (preferably one type or two types) of bacteria of the genus *Streptococcus;* and live bacteria of one or more types (preferably one type or two types) of bacteria of the genus *Lactobacillus;* and further preferably include live bacteria of one or more types (preferably one type or two types) of bacteria of the genus *Lactococcus;* and live bacteria of one or more types (preferably one type or two types) of bacteria of the genus *Streptococcus.*

More specific preferred aspects of the live bacteria of the present invention include live bacteria of one or more types (preferably two or more types, more preferably three or more types) of bacteria selected from the group consisting of *Lactococcus lactis, Lactococcus lactis* subsp. *lactis* biovar *diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae, Streptococcus salivarius* subsp. *thermophilus, Lactobacillus acidophilus, Lactobacillus delbrueckii* subsp. *bulgaricus, Lactobacillus delbrueckii* subsp. *delbrueckii, Lactobacillus delbrueckii* subsp. *lactis, Lactobacillus casei, Lactobacillus paracasei, Lactobacillus gasseri, Lactobacillus helveticus, Lactobacillus johnsonii, Lactobacillus plantarum, Lactobacillus brevis, Lactobacillus casei* subsp. *rhamnosus, Lactobacillus pentosus, Lactobacillus fermentum, Bifidobacterium bifidum, Bifidobacterium breve, Bifidobacterium longum* subsp. *longum, Bifidobacterium longum* subsp. *infantis, Bifidobacterium animalis* subsp. *animalis, Bifidobacterium animalis* subsp. *lactis, Bifidobacterium adolescentis, Bifidobacterium angulatum, Bifidobacterium catenulatum,* and *Bifidobacterium pseudocatenulatum,* and
preferably include live bacteria of one or more types (preferably two types or more, more preferably three types or more) of bacteria selected from the group consisting of *Lactococcus lactis, Lactococcus lactis* subsp. *lactis* biovar *diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae,* and *Streptococcus salivarius* subsp. *thermophilus;* live bacteria of one or more types (preferably two types or more, more preferably three types or more) of bacteria selected from the group consisting of *Lactococcus lactis, Lactococcus lactis* subsp. *lactis* biovar *diacetylactis, Lactococcus lactis* subsp. *cremoris, Lactococcus raffinolactis, Lactococcus piscium, Lactococcus plantarum, Lactococcus garvieae, Lactococcus lactis* subsp. *hordniae, Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus plantarum, Lactobacillus brevis, Lactobacillus casei* subsp. *rhamnosus, Lactobacillus pentosus,* and *Lactobacillus fermentum;* and
live bacteria of one or more types (preferably two types or more, more preferably three types or more) of bacteria selected from the group consisting of *Streptococcus salivarius* subsp. *thermophilus, Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus plantarum, Lactobacillus brevis, Lactobacillus casei* subsp. *rhamnosus, Lactobacillus pentosus,* and *Lactobacillus fermentum.*

### (Classification of lactic acid bacteria and bifidobacteria by optimum growth temperature)

Lactic acid bacteria and bifidobacteria that are used for production of the fermentation composition are also classified the difference in the optimum growth temperature. In general, lactic acid bacteria, etc. having an optimum growth temperature of about 25°C to 30°C are called mesophilic bacteria, and lactic acid bacteria, etc. having an optimum growth temperature of about 37°C to 45°C are called thermophilic bacteria.

Examples of the thermophilic bacteria include *Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus gasseri, Lactobacillus helveticus, Lactobacillus johnsonii, Lactobacillus brevis, Lactobacillus casei* subsp. *rhamnosus, Lactobacillus pentosus, Streptococcus salivarius* subsp. *thermophilus, Bifidobacterium bifidum, Bifidobacterium breve,* and *Bifidobacterium longum* subsp. *longum,* and examples of the mesophilic bacteria include *Lactobacillus casei, Lactobacillus paracasei, Lactobacillus plantarum, Lactococcus lactis* subsp. *lactis, Lactococcus lactis* subsp. *lactis* biovar *diacetylactis,* and *Lactococcus lactis* subsp. *cremoris.*

As the lactic acid bacteria, etc. that are used in the present invention, for example, live bacteria of one or more types of bacteria selected from the group consisting of the above-mentioned thermophilic bacteria and mesophilic bacteria are used, live bacteria of one or more types of bacteria selected from the group consisting of the above-mentioned thermophilic bacteria are used, or live bacteria of one or more types of bacteria selected from the group consisting of the above-mentioned mesophilic bacteria are used, and in particular, live bacteria of one or more types of bacteria selected from the group consisting of the above-mentioned thermophilic bacteria are preferably used.

### (Method of obtaining and so on of lactic acid bacteria, etc.)

The bacterial strains of live bacteria of lactic acid bacteria, etc. and bacterial strains of dead bacterial cells of lactic acid bacteria that are used in the present invention can be obtained from, for example, depositary institutions such as the American type culture collection (USA). As the live bacteria of lactic acid bacteria, etc. that are used in the present invention, a commercially available starter culture may be used.

The concentration of live bacteria of lactic acid bacteria, etc. in the fermentation composition of the present invention is not particularly limited as long as it is 1 × 10⁶ cfu/mL or more and is preferably, for example, 1 × 10⁶ to 1 × 10⁹ cfu/mL or 1 × 10⁶ to 5 × 10⁸ cfu/mL.

The concentration of live bacteria of lactic acid bacteria, etc. can be measured by a pour-plate culture method as the number of live bacteria of lactic acid bacteria, etc. in a fermentation composition. More specifically, the number of live lactic acid bacteria in the fermented product can be measured according to the Ministerial Ordinance on Milk, etc. Appendix Table II, the division of standards for ingredients of milk, etc. and manufacturing, cooking, and preservation methods, (VII) Test Methods for component standards for Milk, etc., (3) Fermented milk and lactic acid bacteria beverage, 3. Method for measuring the number of lactic acid bacteria.

The method for adjusting the concentration of live bacteria of lactic acid bacteria, etc. in the fermentation composition of the present invention is not particularly limited, and when the method for producing a fermentation composition includes the step A, for example, the method may be a method for adjusting the concentration of the lactic acid bacteria, etc. in the fermented product or a method for adjusting the amount of a fermented product to be added, and when the method for producing a fermentation composition includes the step B, for example, the method may be a method for adjusting the amount of live bacteria of lactic acid bacteria, etc. to be added or a method for adjusting the fermentation conditions such as the time of fermentation.

### (Fermentation composition)

The "fermentation composition" as used herein means a fermentation composition having a pH of 6.0 to 7.4 and preferably 6.4 to 7.4 and produced by a production method comprising step (A) or (B), and step (C), in its production processes, (A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production, (B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production.

The "fermentation composition" as used herein encompasses, for example, "fermented milk", "dairy product lactic acid bacteria beverage", "lactic acid bacteria beverage", "food whose main raw material is milk or the like", and so on defined in the "Ministerial Ordinance on Milk and Milk products Concerning Compositional Standards etc." (hereinafter, referred to "Ministerial Ordinance on Milk, etc."), but is not limited thereto. For example, the "fermented milk" defined in the Ministerial Ordinance on Milk, etc. refers to those in a solid form (hard type), a paste form (soft type), or a liquid form (drink type) obtained by fermenting milk or the like, such as raw milk, cow's milk, special milk, raw goat's milk, pasteurized goat's milk, raw sheep's milk, composition modified milk, low-fat milk, skimmed milk, or processed milk; a dairy product, such as cream, butter, cheese, or condensed milk; or food whose main raw material is milk or the like, with lactic acid bacteria or yeast, or those obtained by freezing them, but the "fermentation composition" as used herein is not limited to such fermented milk defined by the Ministerial Ordinance on Milk, etc. The "food whose main raw material is milk or the like" as used herein is not limited to the "food whose main raw material is milk or the like" defined in the Ministerial Ordinance on Milk, etc. as long as the step (B) or (A) is included in the production processes and the pH is 6.0 to 7.4, and includes food whose main raw material is "milk" and/or "a dairy product such as cream, butter, cheese, condensed milk, powdered milk, or fermented milk". Examples of such "food whose main raw material is milk or the like" include sour cream.

The definition and ingredient standards for fermented milk and so on in the Ministerial Ordinance on Milk, etc. are as follows.

In the Ministerial Ordinance on Milk, etc., the fermented milk is defined as "the products which are obtained by fermenting milk, or milk, etc. containing an equal or greater amount of milk solids-not-fat with lactic acid bacteria or yeast and then forming a paste or liquid, or the frozen product.". The ingredient standards are "a milk solids-not-fat content of 8% or more, a number of lactic acid bacteria or yeast (per 1 mL) of 10,000,000 or more, and negative for coliform bacteria". The unit of the number of the lactic acid bacteria or the number of the bifidobacteria, as used herein is represented by CFU (colony forming unit).

In the Ministerial Ordinance on Milk, etc., the dairy product lactic acid bacteria beverage is defined as a "beverage (excluding fermented milk) obtained by processing milk or the like fermented with lactic acid bacteria or yeast or containing the fermented milk or the like as the main ingredient". The ingredient standards are "a milk solids-not-fat content of 3% or more, a number of lactic acid bacteria or yeast (per 1 mL) of 10,000,000 or more, and negative for coliform bacteria".

In the Ministerial Ordinance on Milk, etc., a lactic acid bacteria beverage of food whose main raw material is milk or the like is defined as "beverage (excluding fermented milk) obtained by processing milk or the like with lactic acid bacteria or yeast or containing the fermented milk or the like as the main ingredient". The ingredient standards are "a milk solids-not-fat content of less than 3%, a number of lactic acid bacteria or yeast (per 1 mL) of 1,000,000 or more, and negative for coliform bacteria".

The "fermentation composition" of the present invention may contain a stabilizer, a sweetener, a dietary fiber, vitamins, minerals, a flavoring agent, and so on within a range that does not impair the effects of the present invention. The stabilizer is not particularly limited, and examples thereof include carrageenan and xanthan gum. The sweetener is not particularly limited, and examples thereof include sugars, sugar alcohols, and high-intensity sweeteners, and these sweeteners can be used alone or in a combination of two or more.

When the "fermentation composition" of the present invention contains a stabilizer, the amount of the stabilizer may be, for example, 0.01 to 0.5 wt% or 0.1 to 0.3 wt% based on the total amount of the fermentation composition. The "fermentation composition" of the present invention may contain agar or gelatin, and the total blending amount (dry weight) of the agar and gelatin may be 0.1 to 1 wt% or 0.2 to 0.5 wt% based on the total amount of the fermentation composition.

In the "fermentation composition" of the present invention, the concentration of the milk solids-not-fat content is, for example, 1 to 18 wt%, preferably 2 to 16 wt%, more preferably 2 to 14 wt%, and further preferably 4 to 12 wt%, 6 to 10 wt%, or 7 to 9 wt%, and/or the concentration of the milk fat content is, for example, 0 to 8 wt%, preferably 0.1 to 7 wt%, more preferably 0.5 to 4 wt% or 1 to 3 wt%.

The fermentation composition of the present invention is preferably packed in a container. "Packed in a container" means that the container is filled and sealed. The container is preferably a container that is generally used in production of a fermented milk or the like, and examples thereof include containers made of plastic, glass, paper, or the like.

(Method of producing fermentation composition of the present invention)

The production method of the present invention is not particularly limited as long as the method is a method of producing a fermentation composition, comprising step (A) or (B), and step (C):
(A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
(B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
(C) step C of adding dead bacterial cells of bacteria of the genus *Lactococcus,* wherein the produced fermentation composition has a pH of 6.0 to 7.4, preferably 6.4 to 7.4.

The step A is not particularly limited as long as it is step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production.

The amount of the fermented product to be added to a milk raw material for fermented composition production is not particularly limited, but the amount may be preferably adjusted such that when a fermented product obtained by fermenting a milk raw material for fermented product preparation is added to a milk raw material for fermentation composition production, the concentration of live bacteria of lactic acid bacteria, etc. in the milk raw material for fermentation composition production is, for example, 1 × 10⁶ cfu/mL or more, preferably 1 × 10⁶ to 1 × 10⁹ cfu/mL or 1 × 10⁶ to 5 × 10⁸ cfu/mL.

When the production method of the present invention includes the step A, the method may include or not include step of fermenting a milk raw material for fermentation composition production after the step A. Although fermentation may gradually progress in the fermentation composition during refrigerated storage after the production, such fermentation is not included in the step of the fermentation referred herein.

When the method includes step of fermenting a milk raw material for fermentation composition production after the step A, fermentation in such a way that the pH of the fermentation composition does not become less than 6 can be performed in a relatively short time.

When the production method of the present invention includes the step A, in addition to the addition of a fermented product, live bacteria of lactic acid bacteria, etc. may be separately added to the milk raw material for fermented product preparation.

The step B is not particularly limited as long as it is step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production.

The amount of the live bacteria of lactic acid bacteria, etc. to be added is not particularly limited and can be appropriately adjusted.

The fermentation temperature and the fermentation time can be appropriately set by those skilled in the art depending on the optimum growth temperature and proliferation rate of the lactic acid bacteria, etc. to be used or the type, product design, and so on of the objective fermentation composition. Although the fermentation time is not particularly limited, the fermentation time may be determined such that the pH of the fermentation composition becomes 6.0 to 7.4, preferably 6.4 to 7.4. Such fermentation time is, for example, 1 to 10 hours or 1 to 6 hours.

The milk raw material for fermentation composition production in the step A or step B is not particularly limited as long as it is the milk raw material in the present specification, but from the viewpoint of obtaining more effects of the present invention, the milk raw material for fermentation composition production preferably further contains a pH adjuster.

When the milk raw material for fermentation composition production contains a pH adjuster, the content concentration of the pH adjuster is not particularly limited and can be appropriately adjusted depending of the pH to be adjusted. For example, the concentration of the pH adjusted is, for example, 0.01 to 3 wt% or 0.1 to 2 wt% based on the total amount of the fermentation composition.

The pH of the milk raw material for fermentation composition production is not particularly limited, but is preferably 7 to 8.5.

The step C is not particularly limited as long as it is step C of adding dead bacterial cells of bacteria of the genus *Lactococcus.*

As described above, dead bacterial cells of bacteria of the genus *Lactococcus* may be added at any process when a fermentation composition is produced. For example, dead bacterial cells may be added to a milk raw material before the fermentation process of the milk raw material, dead bacterial cells may be added to a milk raw material during the fermentation process of the milk raw material, or dead bacterial cells may be added to a fermentation composition after the fermentation process of the milk raw material. However, it is preferable to add dead bacterial cells to a milk raw material before the fermentation process of the milk raw material or to add dead bacterial cells of lactic acid bacteria to a milk raw material during the fermentation process of the milk raw material.

In the addition of dead bacterial cells of bacteria of the genus *Lactococcus,* only dead bacterial cells of bacteria of the genus *Lactococcus* may be added to a milk raw material, or dead bacterial cells of bacteria of the genus *Lactococcus* may be added to a milk raw material together with another raw material. In the present specification, addition of dead bacterial cells of bacteria of the genus *Lactococcus* to a milk raw material also means the addition of a milk raw material to dead bacterial cells of bacteria of the genus *Lactococcus,* for convenience. In addition, after addition of dead bacterial cells of bacteria of the genus *Lactococcus,* mixing is preferably performed. In the present invention, when dead bacterial cells of bacteria of the genus *Lactococcus* are added, the milk raw material as the target of the addition, the milk raw material during fermentation, or the fermentation composition after fermentation are preferably subjected to sterilization treatment in advance.

### (Other optional processes)

The production method of the present invention may include, in addition to the steps A and C or the steps B and C, an optional step. Examples of the optional step include step of filling a container with a fermentation composition, a milk raw material for fermented product preparation, or the like.

When the production method of the present invention includes the step B (fermentation step), for example, a method of filling a container with a milk raw material for fermented product preparation (or further live bacteria of lactic acid bacteria, etc.) and then fermenting it (so-called post-fermentation type) and a method of fermenting a milk raw material for fermentation composition production with lactic acid bacteria, etc., crushing the resulting curd, and filling it into a container (so-called pre-fermentation type) are exemplified.

In contrast, when the production method of the present invention includes the step A, for example, a method of filling a container with a fermented product obtained by fermentation of a milk raw material for fermented product preparation and a milk raw material for fermentation composition production simultaneously or sequentially and a method of filling a container with a mixture of a fermented product obtained by fermentation of a milk raw material for fermented product preparation and a milk raw material for fermentation composition production are exemplified.

In the production method of the present invention, the fermentation composition is produced so as to have a pH of 6.0 to 7.4, preferably 6.4 to 7.4. Although the factor that the pH of the fermentation composition is within such a range is not particularly restricted, there may be one or more factors selected from the group consisting of that the degree of fermentation progress is low compared to common fermented milk in both the production methods of the present invention including either the step A or the step B, that a predetermined amount of a pH adjuster is used, and that dead bacterial cells of bacteria of the genus *Lactococcus* are added.

### (Suppression method of the present invention)

The suppression method of the present invention is not particularly limited as long as the method is a method for suppressing an increase in sour taste and odor, a decrease in pH, and/or a decrease in the content concentration (cfu/mL) of the live bacteria during refrigerated storage after the production of a fermentation composition, wherein the fermentation composition having a pH of 6.0 to 7.4, wherein the fermentation composition is produced by a production method comprising step (A) or (B), and step (C):
(A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
(B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
(C) step C of adding dead bacterial cells of bacteria of the genus *Lactococcus,* and the suppression method may further include an optional step.

The steps A to C and the optional step are the same as those described in the production method of the present invention.

### (Fermentation composition in which increase in sour taste and odor is suppressed)

The fermentation composition of the present invention is preferably a fermentation composition in which an increase in the sour taste and odor during refrigerated storage after the production of the fermentation composition is suppressed. As used herein, the fermentation composition in which "an increase in sour taste and odor is suppressed" means a fermentation composition in which an increase in sour taste and odor is suppressed compared to a fermentation composition (hereinafter, also referred to as a "control fermentation composition of the present invention") produced by the same production method using the same type of milk raw material except that dead bacterial cells of lactic acid bacteria are not added and/or that a pH adjuster (preferably, one or more pH adjusters selected from sodium or potassium salts of organic acids and bases) is not added (preferably, not adjusting the pH of the milk raw material for fermentation composition production to 7 or higher).

The degree of increasing in sour taste and odor of some fermentation composition during refrigerated storage after the production and what is the degree of such increasing in sour taste and odor compared to the control fermentation composition according to the present invention (for example, the increasing is suppressed or not) can be easily and clearly determined by a trained panelist. General methods can be used for evaluation criteria and summarization of evaluations by panelists. The number of panelists for evaluating the degree of increasing in sour taste and odor in a fermentation composition may be one, but the lower limit of the number of panelists can be, for example, three or more, preferably five or more, from the viewpoint of evaluating with higher objectivity, and the upper limit of the number of panelists can be, for example, seven or less from the viewpoint of conducting evaluation tests more easily. The evaluation of the degree of increasing in sour taste and odor in a fermentation composition when the number of panelists is two or more may adopt the average rating of all panelists for the degree of increasing in sour taste and odor in the fermentation composition.

### (Fermentation composition in which decrease in pH is suppressed)

The fermentation composition of the present invention is preferably a fermentation composition in which a decrease in pH of the fermentation composition during refrigerated storage after the production is suppressed. As used herein, the fermentation composition in which "a decrease in pH is suppressed" means a fermentation composition in which a decrease in pH is suppressed compared to the above "control fermentation composition of the present invention".

As the fermentation composition in which a decrease in pH is suppressed in the present invention, more specifically, the fermentation composition is preferably a fermentation composition in which the degree of decrease in pH of a fermentation composition after refrigerated storage for 14 days is 1 or less, preferably 0.6 or less, compared to the pH of the fermentation composition immediately after the production and before refrigerated storage.

### (Fermentation composition in which a decrease in content composition of live bacteria of lactic acid bacteria, etc. is suppressed)

The fermentation composition of the present invention is preferably a fermentation composition in which a decrease in the content concentration of live bacteria of lactic acid bacteria, etc. during refrigerated storage after the production of the fermentation composition is suppressed. As used herein, the fermentation composition in which "a decrease in the content concentration of live bacteria of lactic acid bacteria, etc. is suppressed" means a fermentation composition in which a decrease in the content concentration of live bacteria of lactic acid bacteria, etc. is suppressed compared to the above-mentioned "control fermentation composition of the present invention".

As the fermentation composition in which a decrease in the content concentration of live bacteria of lactic acid bacteria, etc. is suppressed in the present invention, more specifically, the fermentation composition is preferably a fermentation composition in which the content concentration (cfu/mL) of live bacteria of one or more types of bacteria selected from the group consisting of lactic acid bacteria and bacteria of the genus *Bifidobacterium* in the fermentation composition after refrigerated storage for 14 days is 0.2 times or more, preferably 0.2 to 30 times or 0.2 to 25 times, based on the content concentration (cfu/mL) of live bacteria of the bacteria in the fermentation composition before refrigerated storage.

### (Refrigerated storage)

The "refrigerated storage" as used herein is performed at, for example, 1 to 10°C, preferably 4 to 10°C or 10°C.

Hereinafter, the present invention will be described in detail by Examples but is not limited to these Examples.

### Examples

### [Test 1: Comparative Example 1] Verification of change in pH and live lactic acid bacteria concentration during refrigerated storage

In order to investigate changes in the pH and live lactic acid bacteria concentration during refrigerated storage of a fermentation composition, the following test was performed.

### (Method)

Live lactic acid bacteria of the genus *Lactococcus* were added to cow's milk (milk raw material for fermented product preparation) as a substrate, and fermentation was then performed at 30°C until the above-described live bacteria concentration reached a bacterial concentration (cfu/mL) on the order of 10 to the 9th power to prepare a fermented product. In all tests in Examples of the present application, the number of lactic acid bacteria in a fermented product was measured according to the Ministerial Ordinance on Milk, etc. Appendix Table II, the division of standards for ingredients of milk, etc. and manufacturing, cooking, and preservation methods, (VII) Test Methods for ingredient standards for Milk, etc., (3) Fermented milk and lactic acid bacteria beverage, 3. Method for measuring the number of lactic acid bacteria.

Subsequently, the above-described fermented product (the fermented product comprising live lactic acid bacteria of the genus *Lactococcus* at a bacterial concentration (cfu/mL) on the order of 10 to the 9th power) was added to and mixed with cow's milk (milk raw material for fermentation composition production) as a substrate at 3 wt% or 7 wt% to prepare each fermentation composition sample. Subsequently, each fermentation composition sample was stored refrigerated at 10°C. Each fermentation composition sample was measured for the pH and the concentration of live lactic acid bacteria of the genus *Lactococcus* "before refrigerated storage", "after refrigerated storage for 14 days", and "after refrigerated storage for 28 days". In addition, sensory evaluation of each fermentation composition sample for sour taste and odor was performed by seven panelists, and the average rating thereof was taken as the overall comment on the fermentation composition sample. These results are shown in Table 1 below.

**[Table 1]**

| Amount of | Before refrigerated storage | | | After refrigerated storage for 14 days | | | After refrigerated storage for 28 days | | |
|---|---|---|---|---|---|---|---|---|---|
| fermented product added | pH | Sensory evaluation | Concentration of live bacteria of lactic acid bacteria of the genus Lactococcus (cfu/ml) | pH | Sensory evaluation | Concentration of live bacteria of lactic acid bacteria of the genus Lactococcus (cfu/ml) | pH | Sensory evaluation | Concentration of live bacteria of lactic acid bacteria of the genus Lactococcus (cfu/ml) |
| 3% | 6.6 | No sour taste and odor | 3×10⁷ | 5.3 | Slight sour taste and odor | 7×10⁸ | 4.7 | Slightly strong sour taste and odor | 4×10⁷ |
| 7% | 6.5 | No sour taste and odor | 8×10⁷ | 5.0 | Has sour taste and odor | 7×10⁸ | 4.5 | Slightly strong sour taste and odor | 3×10⁸ |

### (Results)

As obvious from Table 1, in every fermentation composition sample, the pH decreased during refrigerated storage and decreased after refrigerated storage for 14 days by 1.3 or more compared to the pH before the refrigerated storage. Sour taste and odor were confirmed after refrigerated storage for 14 days, and the sour taste and odor became further stronger after refrigerated storage for 28 days. In every sample, a live bacteria concentration higher than the concentration of live lactic acid bacteria of the genus *Lactococcus* before refrigerated storage was maintained at both time points of refrigerated storage for 14 days and 28 days.

### [Test 2: Comparative Example 2] Verification of change in live lactic acid bacteria concentration during refrigerated storage of fermentation composition in acidic pH range

In order to verify the change in the live lactic acid bacteria concentration when a fermentation composition with a pH in an acidic range was stored refrigerated, the following test was performed.

### (Method)

Live lactic acid bacteria of the genus *Lactococcus* were added to cow's milk (milk raw material for fermentation composition production) as a substrate, and fermentation was performed at 30°C until the bacterial concentration (cfu/mL) reached the order of 10 to the 9th power to prepare a fermentation composition sample with a pH of 4.3. The fermentation composition sample was stored refrigerated at 10°C. The concentration of the live lactic acid bacteria of the genus *Lactococcus* in the fermentation composition sample was measured "before refrigerated storage", "after refrigerated storage for 14 days", and "after refrigerated storage for 28 days". The results thereof are shown in Table 2 below.

**[Table 2]**

| | Before refrigerated storage | After refrigerated storage for 14 days | After refrigerated storage for 28 days |
|---|---|---|---|
| Number of live bacteria of lactic acid bacteria of the genus Lactococcus (cfu/ml) | 2×10⁹ | 2×10⁸ | 6×10⁵ |

### (Results)

The results of Table 2 demonstrate that when a fermentation composition sample with a pH in an acidic range is stored refrigerated, live lactic acid bacteria concentration decreases.

### [Test 3: Example 1] Verification of effect on changes in pH and live lactic acid bacteria concentration during refrigerated storage by addition of dead bacterial cells of lactic acid bacteria and pH adjuster

In order to investigate effects on the changes in pH and live lactic acid bacteria concentration during refrigerated storage of a fermentation composition by addition of dead bacterial cells of lactic acid bacteria and a pH adjuster to the fermentation composition, the following test was performed.

### (Method)

Live lactic acid bacteria of the genus *Lactococcus* were added to cow's milk (milk raw material for fermented product preparation) as a substrate, and fermentation was then performed at 30°C until the above-described live bacteria concentration reached a bacterial concentration (cfu/mL) on the order of 10 to the 9th power to prepare a fermented product.

Subsequently, dead bacterial cells of lactic acid bacteria of the genus *Lactococcus* were added to cow's milk (milk raw material for fermentation composition production) as a substrate at 1 × 10⁹ cells/g, and trisodium citrate as a pH adjuster was added thereto at 1 wt% to adjust the pH, and the above-described fermented product (the fermented product comprising live lactic acid bacteria of the genus *Lactococcus* at a bacterial concentration (cfu/mL) on the order of 10 to the 9th power) was added to and mixed with the above at 0.5 wt%, 1.0 wt%, or 1.5 wt% to prepare each fermentation composition sample, followed by refrigerated storage at 10°C. Each fermentation composition sample was measured for the pH and the concentration of live lactic acid bacteria of the genus *Lactococcus* "before refrigerated storage" and "after refrigerated storage for 14 days". In addition, sensory evaluation of each fermentation composition sample for sour taste and odor was performed by seven panelists, and the average rating thereof was taken as the overall comment on the fermentation composition sample. These results are shown in Table 3 below.

**[Table 3]**

| Amount of fermented product added | Before refrigerated storage | | | After refrigerated storage for 14 days | | |
|---|---|---|---|---|---|---|
| | pH | Sensory evaluation | Concentration of live bacteria of lactic acid bacteria of the genus Lactococcus (cfu/ml) | pH | Sensory evaluation | Concentration of live bacteria of lactic acid bacteria of the genus Lactococcus (cfu/ml) |
| 0.5% | 7.1 | No sour taste and odor | 1×10⁷ | 6.6 | No sour taste and odor | 2×10⁸ |
| 1.0% | 7.1 | No sour taste and odor | 1×10⁷ | 6.8 | No sour taste and odor | 7×10⁷ |
| 1.5% | 7.0 | No sour taste and odor | 1×10⁷ | 6.4 | Feel slight difference in sour taste and odor | 1×10⁸ |

### (Results)

As obvious from Table 3, in every fermentation composition sample, although the pH slightly decreased during refrigerated storage, the pH was maintained in a neutral range of 6.4 or more. That is, the decrease in pH after refrigerated storage for 14 days was merely 0.6 or less compared to before the refrigerated storage. In the fermentation composition samples after refrigerated storage for 14 days, sour taste and odor were not sensed or were a degree of being significantly slightly sensed. In every fermentation composition sample, live bacteria concentration higher than the concentration of live lactic acid bacteria of the genus *Lactococcus* before refrigerated storage was maintained also at the time point of refrigerated storage for 14 days.

From the above, it was demonstrated that "a decrease in pH" and "an increase in sour taste and odor" during refrigerated storage are suppressed by addition of dead bacterial cells of lactic acid bacteria of the genus *Lactococcus* and a pH adjuster.

### [Test 4: Example 2] Verification of effect in use of another type of lactic acid bacteria

In order to verify whether an effect of suppressing "a decrease in pH" and "an increase in sour taste and odor" during refrigerated storage by adding dead bacterial cells of lactic acid bacteria of the genus *Lactococcus* is obtained or not even when using live lactic acid bacteria of another type than the lactic acid bacteria of the genus *Lactococcus,* the following test was performed.

Live lactic acid bacteria of the genus *Streptococcus* were added to cow's milk (milk raw material for fermented product preparation) as a substrate, and fermentation was then performed at 40°C until the above-described live bacteria concentration reached a bacterial concentration (cfu/mL) on the order of 10 to the 8th power to prepare a fermented product.

Subsequently, dead bacterial cells of lactic acid bacteria of the genus *Lactococcus* were added to cow's milk (milk raw material for fermentation composition production) as a substrate at 1 × 10⁹ cells/g, and the above-described fermented product (the fermented product comprising live lactic acid bacteria of the genus *Streptococcus* at a bacterial concentration (cfu/mL) on the order of 10 to the 8th power) was then added to and mixed with the above at 3 wt%, 6 wt%, or 9 wt% to prepare each fermentation composition sample, followed by refrigerated storage at 10°C. Each sample was measured for the pH and the concentration of live lactic acid bacteria of the genus *Streptococcus* "before refrigerated storage", "after refrigerated storage for 14 days", and "after refrigerated storage for 28 days". In addition, sensory evaluation of each fermentation composition sample for sour taste and odor was performed by seven panelists, and the average rating thereof was taken as the overall comment on the fermentation composition sample. These results are shown in Table 4 below.

**[Table 4]**

| Amount of fermented product added | Before refrigerated storage | | | After refrigerated storage for 14 days | | | After refrigerated storage for 28 days | | |
|---|---|---|---|---|---|---|---|---|---|
| | pH | Sensory evaluation | Concentration of live bacteria of lactic acid bacteria of the genus Streptococcus (cfu/ml) | pH | Sensory evaluation | Concentration of live bacteria of lactic acid bacteria of the genus Streptococcus (cfu/ml) | pH | Sensory evaluation | Concentration of live bacteria of lactic acid bacteria of the genus Streptococcus (cfu/ml) |
| 3% | 6.6 | No sour taste and odor | 4×10⁶ | 6.6 | No sour taste and odor | 1×10⁶ | 6.6 | No sour taste and odor | 2×10⁶ |
| 6% | 6.5 | No sour taste and odor | 1×10⁶ | 6.5 | No sour taste and odor | 2×10⁷ | 6.6 | No sour taste and odor | 1×10⁶ |
| 9% | 6.5 | No sour taste and odor | 1×10⁶ | 6.5 | No sour taste and odor | 3×10⁶ | 6.5 | No sour taste and odor | 4×10⁶ |

### (Results)

As obvious from Table 4, in every fermentation composition sample, the pH was maintained in a neutral range of 6.5 or more during refrigerated storage. In addition, in every fermentation composition sample, sour taste and odor were not sensed after refrigerated storage for 14 days and 28 days. In addition, in every fermentation composition sample, live bacteria concentration higher than the concentration of live lactic acid bacteria of the genus *Streptococcus* before refrigerated storage was maintained at both time points of refrigerated storage for 14 days and 28 days.

From the above, it was demonstrated that "a decrease in pH" and "an increase in sour taste and odor" during refrigerated storage are suppressed by addition of dead bacterial cells of lactic acid bacteria of the genus *Lactococcus* even when live lactic acid bacteria of another type than the lactic acid bacteria of the genus *Lactococcus* were used.

### Industrial Applicability

According to the present invention, it is possible to provide a fermentation composition comprising live bacteria of lactic acid bacteria, etc. at a certain concentration or more and having a pH in a neutral range, in which fermentation composition "an increase in sour taste and odor", "a decrease in pH", and/or "a decrease in the live bacteria concentration (cfu/mL) of lactic acid bacteria, etc." during refrigerated storage after the production are suppressed, and a method of producing the composition, and so on.

## Claims

1. A fermentation composition having a pH of 6.0 to 7.4, the composition comprising: (a) 1 × 10⁶ cfu/mL or more of live bacteria of one or more types of bacteria selected from the group consisting of lactic acid bacteria and bacteria of the genus *Bifidobacterium;* (b) a milk raw material and/or a fermented product using a milk raw material; and (c) dead bacterial cells of bacteria of the genus *Lactococcus.*

2. A fermentation composition having a pH of 6.0 to 7.4 produced by a production method comprising step (A) or (B), and step (C):
(A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
(B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
(C) step C of adding dead bacterial cells of bacteria of the genus *Lactococcus.*

3. The fermentation composition according to claim 1 or 2, wherein a content concentration of the dead bacterial cells of bacteria of the genus *Lactococcus* is 1 × 10⁸ to 1 × 10¹⁰ cells/g.

4. The fermentation composition according to any one of claims 1 to 3, wherein the fermentation composition further comprises a pH adjuster, or the milk raw material for fermentation composition production is a milk raw material comprising a pH adjuster.

5. The fermentation composition according to any one of claims 1 to 4, wherein the live bacteria of one or more types of bacteria selected from the group consisting of lactic acid bacteria and bacteria of the genus *Bifidobacterium* are one or more types of live bacteria selected from the group consisting of bacteria of the genus *Lactococcus,* bacteria of the genus *Streptococcus,* bacteria of the genus *Lactobacillus,* and bacteria of the genus *Bifidobacterium.*

6. The fermentation composition according to any one of claims 1 to 5, wherein a difference between pH of the fermentation composition before refrigerated storage and pH of the fermentation composition after refrigerated storage for 14 days is less than 1.

7. A method of producing a fermentation composition having a pH of 6.0 to 7.4, in which an increase in sour taste and odor, a decrease in pH, and/or a decrease in content concentration (cfu/mL) of live bacteria during refrigerated storage after the production of the fermentation composition are suppressed, the method comprising step (A) or (B), and step (C):
(A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
(B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
(C) step C of adding dead bacterial cells of bacteria of the genus *Lactococcus.*

8. A method for suppressing an increase in sour taste and odor, a decrease in pH, and/or a decrease in content concentration (cfu/mL) of live bacteria during refrigerated storage after the production of a fermentation composition, wherein the fermentation composition has a pH of 6.0 to 7.4, wherein the fermentation composition is produced by a production method comprising step (A) or (B), and step (C):
(A) step A of adding a fermented product obtained by fermentation of a milk raw material for fermented product preparation with live bacteria of one or more types of bacteria selected from the group consisting of lactic acid bacteria and bacteria of the genus *Bifidobacterium* to a milk raw material for fermentation composition production;
(B) step B of adding live bacteria of one or more types of bacteria selected from the group consisting of lactic acid bacteria and bacteria of the genus *Bifidobacterium* to a milk raw material for fermentation composition production, and fermenting the milk raw material for fermentation composition production;
(C) step C of adding dead bacterial cells of bacteria of the genus *Lactococcus.*
